(19) Europäisches Patentamt
European Patent Office
Office européen des brevets

(11) **EP 4 717 505 A1**

(12) **EUROPEAN PATENT APPLICATION**

(43) Date of publication:
01.04.2026 Bulletin 2026/14

(21) Application number: 25205261.8

(22) Date of filing: 29.09.2025

(51) International Patent Classification (IPC):
**B60L 3/10** (2006.01)     **B60L 15/20** (2006.01)
**B60W 30/18** (2012.01)     **B60K 17/356** (2006.01)
**B60W 10/08** (2006.01)     **B60W 10/16** (2012.01)
**B60W 50/08** (2020.01)

(52) Cooperative Patent Classification (CPC):
**B60L 15/20; B60K 7/0007; B60K 17/354;**
**B60K 17/356; B60L 3/10; B60L 3/102; B60L 3/106;**
**B60W 10/08; B60W 10/16; B60W 30/18027;**
**B60W 30/18172; B60W 50/082;** B60L 2220/42;
B60L 2240/421; B60L 2240/423;          (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **29.09.2024   CN 202411373967**

(71) Applicant: **Hycet Transmission System (Jiangsu)**
**Co., Ltd.**
**Zhenjiang, Jiangsu 212200 (CN)**

(72) Inventors:
• **QIAO, Jingbo**
  **Zhenjiang, 212200 (CN)**
• **SHEN, Zhiyuan**
  **Zhenjiang, 212200 (CN)**

(74) Representative: **Murgitroyd & Company**
**165-169 Scotland Street**
**Glasgow G5 8PL (GB)**

(54) **VEHICLE AND CONTROL METHOD THEREFOR, CONTROL DEVICE AND COMPUTER-READABLE STORAGE MEDIUM**

(57)     Disclosed are a vehicle and a control method therefor, a control device, and a computer-readable storage medium. The vehicle includes a front-axle drive motor and a rear-axle drive motor. The control method includes: determining that the vehicle is in a traction mode; determining, based on target speeds of the front-axle and rear-axle drive motors and actual speeds of the front-axle and rear-axle drive motors, requested torque of the front-axle and rear-axle drive motors; correcting, based on a front wheel speed and a rear wheel speed, the requested torque of the front-axle and rear-axle drive motors to obtain output torque of the front-axle and rear-axle drive motors; and controlling, based on the output torque of the front-axle and rear-axle drive motors, the front and rear wheels. Thus, the method achieves closed-loop control of the motor speed while reducing information interaction time.

(52) Cooperative Patent Classification (CPC): (Cont.)
B60L 2240/461; B60L 2240/465; B60L 2250/12;
B60L 2250/16; B60L 2260/20; B60L 2260/28;
B60W 2520/28; B60W 2710/081; B60W 2710/083;
B60W 2710/125; B60W 2720/403; Y02T 10/72

**Description**

**TECHNICAL FIELD**

The present disclosure relates to the field of vehicle control technologies, and in particular, to a control method for a vehicle, a control device for a vehicle, a computer-readable storage medium, and a vehicle.

**BACKGROUND**

A desert surface layer is composed of fine gravel, with a loose structure and almost zero cohesion between sand particles, resulting in a very low adhesion coefficient. When a vehicle is driving on desert terrain, deformation and compression of the sand layer continuously creep backward, which can easily cause driving wheels to slip and sink, making driving difficult.

In related technologies, escape of a vehicle from the desert terrain is achieved through hardware optimization, specifically by equipping the vehicle with a front-axle differential lock, a rear-axle differential lock, and a central differential lock, which forcibly connect four wheels together through hardware structure, allowing the four wheels to be driven simultaneously and maintain the same wheel speed to achieve escape. However, the application of the central differential lock in this technical solution significantly increases a production cost of the vehicle.

**SUMMARY**

The present disclosure aims to solve at least one of the technical problems in the related technologies to some extent. To this end, a first objective of the present disclosure is to provide a control method for a vehicle, which is applicable to vehicles not equipped with a central differential lock. By calculating, based on a target motor speed and an actual motor speed, requested torque of a motor, and correcting, based on a wheel speed, the requested torque of the motor in real time, closed-loop control of the motor speed is achieved, while the information interaction time is shortened, effectively solving the problem of wheel slip and vehicle sinking in sandy conditions without increasing the production cost of the vehicle.

A second objective of the present disclosure is to provide a control device for a vehicle.

A third objective of the present disclosure is to provide a computer-readable storage medium.

The fourth objective of the present disclosure is to provide a vehicle.

To achieve the above objectives, an embodiment of a first aspect of the present disclosure provides a control method for a vehicle. The vehicle includes a front-axle drive motor and a rear-axle drive motor. The front-axle drive motor is configured to drive front wheels of the vehicle, and the rear-axle drive motor is configured to drive rear wheels of the vehicle. The control method for the vehicle includes: determining that the vehicle is in a stuck vehicle recovery mode; determining, based on a target speed of the front-axle drive motor and an actual speed of the front-axle drive motor, requested torque of the front-axle drive motor, and determining, based on a target speed of the rear-axle drive motor and an actual speed of the rear-axle drive motor, requested torque of the rear-axle drive motor; correcting, based on a front wheel speed and a rear wheel speed, the requested torque of the front-axle drive motor and the requested torque of the rear-axle drive motor to obtain output torque of the front-axle drive motor and output torque of the rear-axle drive motor; and controlling, based on the output torque of the front-axle drive motor and the output torque of the rear-axle drive motor, the front and rear wheels.

According to the control method for the vehicle of the embodiment of the present disclosure, the vehicle includes the front-axle drive motor and the rear-axle drive motor. The front-axle drive motor is configured to drive the front wheels of the vehicle, and the rear-axle drive motor is configured to drive the rear wheels of the vehicle. According to the control method for the vehicle, firstly, it is determined that the vehicle is in a stuck vehicle recovery mode, and then the requested torque of the front-axle drive motor is determined based on the target speed of the front-axle drive motor and the actual speed of the front-axle drive motor, and the requested torque of the rear-axle drive motor is determined based on the target speed of the rear-axle drive motor and the actual speed of the rear-axle drive motor. The requested torque of the front-axle drive motor and the requested torque of the rear-axle drive motor are corrected based on the front wheel speed and the rear wheel speed to obtain the output torque of the front-axle drive motor and the output torque of the rear-axle drive motor. The front wheels and the rear wheels are controlled based on the output torque of the front-axle drive motor and the output torque of the rear-axle drive motor. Thus, this method is applicable to vehicles not equipped with a central differential lock. By calculating the requested torque of the motor based on the target motor speed and the actual motor speed and correcting the requested torque of the motor based on the wheel speed in real time, the closed-loop control of the motor speed is achieved, while the information interaction time is shortened, effectively solving the problem of wheel slip and vehicle sinking in sandy conditions without increasing the production cost of the vehicle.

In addition, according to the control method for the vehicle provided by the above embodiment of the present disclosure, the following additional technical features may also be included.

According to an embodiment of the present disclosure, the correcting, based on a front wheel speed and a rear wheel speed, the requested torque of the front-axle drive motor and the requested torque of the rear-axle drive motor to obtain output torque of the front-axle drive motor and output torque of the rear-axle drive motor includes: when a first speed difference between a minimum value of the front wheel speed and a maximum value of the rear wheel speed is greater than a preset vehicle speed threshold, determining, based on the first speed difference, a first torque reduction coefficient; when a second speed difference between a minimum value of the rear wheel speed and a maximum value of the front wheel speed is greater than the preset vehicle speed threshold, determining, based on the second speed difference, a second torque reduction coefficient; correcting, based on the first torque reduction coefficient, the front-axle drive requested torque to obtain the output torque of the front-axle drive motor; and correcting, based on the second torque reduction coefficient, the rear-axle drive requested torque to obtain the output torque of the rear-axle drive motor.

According to an embodiment of the present disclosure, the correcting, based on a front wheel speed and a rear wheel speed, the requested torque of the front-axle drive motor and the requested torque of the rear-axle drive motor to obtain output torque of the front-axle drive motor and output torque of the rear-axle drive motor includes: when a third speed difference between a maximum value of the front wheel speed and a minimum value of the rear wheel speed is less than a preset vehicle speed threshold, determining, based on the third speed difference, a first torque increase coefficient; when a fourth speed difference between a maximum value of the rear wheel speed and a minimum value of the front wheel speed is less than the preset vehicle speed threshold, determining, based on the fourth speed difference, a second torque increase coefficient; correcting, based on the first torque increase coefficient, the front-axle drive requested torque to obtain the output torque of the front-axle drive motor; and correcting, based on the second torque increase coefficient, the rear-axle drive requested torque to obtain the output torque of the rear-axle drive motor.

According to an embodiment of the present disclosure, the determining, based on a target speed of the front-axle drive motor and an actual speed of the front-axle drive motor, requested torque of the front-axle drive motor includes: obtaining a target vehicle speed; determining, based on the target vehicle speed, a transmission ratio of the front-axle drive motor, and a tire circumference of the front wheel, the target speed of the front-axle drive motor; and performing proportional-integral control on a difference between the target speed of the front-axle drive motor and the actual speed of the front-axle drive motor to obtain the front-axle drive motor required torque.

According to an embodiment of the present disclosure, the determining, based on a target speed of the rear-axle drive motor and an actual speed of the rear-axle drive motor, requested torque of the rear-axle drive motor includes: obtaining a target vehicle speed; determining, based on the target vehicle speed, a transmission ratio of the rear-axle drive motor, and a tire circumference of the rear wheel, the target speed of the rear-axle drive motor; and performing proportional-integral control on a difference between the target speed of the rear-axle drive motor and the actual speed of the rear-axle drive motor to obtain the rear-axle drive motor required torque.

According to an embodiment of the present disclosure, the control method for the vehicle further includes: determining, based on the actual speed of the front-axle drive motor and a voltage value of the front-axle drive motor, external characteristic torque of the front-axle drive motor, and taking a smaller value between the external characteristic torque of the front-axle drive motor and the output torque of the front-axle drive motor as a final output torque of the front-axle drive motor; and determining, based on the actual speed of the rear-axle drive motor and a voltage value of the rear-axle drive motor, external characteristic torque of the rear-axle drive motor, and taking a smaller value between the external characteristic torque of the rear-axle drive motor and the output torque of the rear-axle drive motor as a final output torque of the rear-axle drive motor.

According to an embodiment of the present disclosure, the vehicle further includes a front-axle differential lock and a rear-axle differential lock, and when the vehicle has entered the stuck vehicle recovery mode, the front-axle differential lock and the rear-axle differential lock are in a locked state.

To achieve the above objective, an embodiment of a second aspect of the present disclosure provides a control device for a vehicle. The vehicle includes a front-axle drive motor and a rear-axle drive motor. The front-axle drive motor is configured to drive front wheels of the vehicle, and the rear-axle drive motor is configured to drive rear wheels of the vehicle. The control device of the vehicle includes: a first determination module, configured to determine that the vehicle is in a stuck vehicle recovery mode; a second determination module, configured to determine, based on a target speed of the front-axle drive motor and an actual speed of the front-axle drive motor, a required torque of the front-axle drive motor; a third determination module, configured to determine, based on a target speed of the rear-axle drive motor and an actual speed of the rear-axle drive motor, a required torque of the rear-axle drive motor; a calculation module, configured to correct, based on a front wheel speed and a rear wheel speed, the required torque of the front-axle drive motor and the required torque of the rear-axle drive motor to obtain output torque of the front-axle drive motor and output torque of the rear-axle drive motor; a first control module, configured to control, based on the output torque of the front-axle drive motor, the front wheels; and a second control module, configured to control, based on the output torque of the rear-axle drive motor, the rear wheels.

According to an embodiment of the present disclosure, during a process of correcting, based on a front wheel speed and a rear wheel speed, the required torque of the front-axle drive motor and the required torque of the rear-axle drive motor to obtain output torque of the front-axle drive motor and output torque of the rear-axle drive motor by the calculation module, the calculation module is further configured to: when a first speed difference between a minimum value of the front wheel speed and a maximum value of the rear wheel speed is greater than a preset vehicle speed threshold, determine, based on the first speed difference, a first torque reduction coefficient; when a second speed difference between a minimum value of the rear wheel speed and a maximum value of the front wheel speed is greater than the preset vehicle speed threshold, determine, based on the second speed difference, a second torque reduction coefficient; correct, based on the first torque reduction coefficient, the front-axle drive requested torque to obtain the output torque of the front-axle drive motor; and correct, based on the second torque reduction coefficient, the rear-axle drive requested torque to obtain the output torque of the rear-axle drive motor.

According to an embodiment of the present disclosure, during a process of correcting, based on a front wheel speed and a rear wheel speed, the required torque of the front-axle drive motor and the required torque of the rear-axle drive motor to obtain output torque of the front-axle drive motor and output torque of the rear-axle drive motor by the calculation module, the calculation module is further configured to: when a third speed difference between a maximum value of the front wheel speed and a minimum value of the rear wheel speed is less than a preset vehicle speed threshold, determine, based on the third speed difference, a first torque increase coefficient; when a fourth speed difference between a maximum value of the rear wheel speed and a minimum value of the front wheel speed is less than the preset vehicle speed threshold, determine, based on the fourth speed difference, a second torque increase coefficient; correct, based on the first torque increase coefficient, the front-axle drive requested torque to obtain the output torque of the front-axle drive motor; and correct, based on the second torque increase coefficient, the rear-axle drive requested torque to obtain the output torque of the rear-axle drive motor.

According to an embodiment of the present disclosure, during a process of determining, based on a target speed of the front-axle drive motor and an actual speed of the front-axle drive motor, requested torque of the front-axle drive motor by the second determination module, the second determination module is further configured to: obtain a target vehicle speed; determine, based on the target vehicle speed, a transmission ratio of the front-axle drive motor, and a tire circumference of the front wheel, the target speed of the front-axle drive motor; and perform proportional-integral control on a difference between the target speed of the front-axle drive motor and the actual speed of the front-axle drive motor to obtain the front-axle drive motor required torque.

According to an embodiment of the present disclosure, during a process of determining, based on a target speed of the rear-axle drive motor and an actual speed of the rear-axle drive motor, requested torque of the rear-axle drive motor by the third determination module, the third determination module is further configured to: obtain a target vehicle speed; determine, based on the target vehicle speed, a transmission ratio of the rear-axle drive motor, and a tire circumference of the rear wheel, the target speed of the rear-axle drive motor; and perform proportional-integral control on a difference between the target speed of the rear-axle drive motor and the actual speed of the rear-axle drive motor to obtain the rear-axle drive motor required torque.

According to an embodiment of the present disclosure, the first control module is further configured to: determine, based on the actual speed of the front-axle drive motor and a voltage value of the front-axle drive motor, external characteristic torque of the front-axle drive motor, and take a smaller value between the external characteristic torque of the front-axle drive motor and the output torque of the front-axle drive motor as a final output torque of the front-axle drive motor; and the second control module is further configured to: determine, based on the actual speed of the rear-axle drive motor and a voltage value of the rear-axle drive motor, external characteristic torque of the rear-axle drive motor, and take a smaller value between the external characteristic torque of the rear-axle drive motor and the output torque of the rear-axle drive motor as a final output torque of the rear-axle drive motor.

According to the control device of the vehicle provided by the embodiment of the present disclosure, the vehicle includes the front-axle drive motor and the rear-axle drive motor. The front-axle drive motor is configured to drive the front wheels of the vehicle, and the rear-axle drive motor is configured to drive the rear wheels of the vehicle. The control device of the vehicle is configured to determine that the vehicle is in the stuck vehicle recovery mode through the first determination module, determine the required torque of the front-axle drive motor through the second determination module based on the target speed and the actual speed of the front-axle drive motor, determine the required torque of the rear-axle drive motor through the third determination module based on the target speed and the actual speed of the rear-axle drive motor, correct the required torque of the front-axle drive motor and the required torque of the rear-axle drive motor through the calculation module based on the front wheel speed and the rear wheel speed to obtain the output torque of the front-axle drive motor and the output torque of the rear-axle drive motor, control the front wheels through the first control module based on the output torque of the front-axle drive motor, and control the rear wheels through the second control module based on the output torque of the rear-axle drive motor. Thus, the device is applicable to vehicles not equipped with a central differential lock. By calculating the required torque of the motor based on the target speed and the actual speed of the motor and correcting the required torque of the motor in real time based on the wheel speed, the closed-loop control of the motor speed is achieved, while the information interaction time is shortened, effectively solving the problem of vehicle slipping and getting stuck in sandy conditions without increasing the production cost of the vehicle.

To achieve the above objective, an embodiment of a third aspect of the present disclosure provides a computer-readable storage medium, on which a vehicle control program is stored. When the vehicle control program is executed by a processor, the above-mentioned control method for the vehicle is implemented.

According to the computer-readable storage medium in the embodiment of the present disclosure, when the vehicle control program is executed by the processor, the above-mentioned control method for the vehicle is implemented. Based on the above-mentioned control method for the vehicle, the closed-loop control of the motor speed is achieved, while the information interaction time is shortened, effectively solving the problem of vehicle slipping and getting stuck in sandy conditions without increasing the production cost of the vehicle.

To achieve the above objective, an embodiment of a fourth aspect of the present disclosure provides a vehicle, including: a front-axle drive motor, a front-axle drive motor controller, a rear-axle drive motor, and a rear-axle drive motor controller. The front-axle drive motor controller is configured to, when the vehicle is in a stuck vehicle recovery mode, determine, based on a target speed of the front-axle drive motor and an actual speed of the front-axle drive motor, a required torque of the front-axle drive motor, and correct, based on a front wheel speed and a rear wheel speed, the required torque of the front-axle drive motor to obtain output torque of the front-axle drive motor, and control, based on the output torque of the front-axle drive motor, the front wheels. The rear-axle drive motor controller is configured to, when the vehicle is in the stuck vehicle recovery mode, determine, based on a target speed of the rear-axle drive motor and an actual speed of the rear-axle drive motor, a required torque of the rear-axle drive motor, and correct, based on the front wheel speed and the rear wheel speed, the required torque of the rear-axle drive motor to obtain output torque of the rear-axle drive motor, and control, based on the output torque of the rear-axle drive motor, the rear wheels.

According to the vehicle provided by the embodiment of the present disclosure, the front-axle drive motor controller is configure to, when the vehicle is in the stuck vehicle recovery mode, determine the required torque of the front-axle drive motor based on the target speed and the actual speed of the front-axle drive motor, correct the required torque of the front-axle drive motor based on the front wheel speed and the rear wheel speed to obtain the output torque of the front-axle drive motor, and control the front wheels based on the output torque of the front-axle drive motor. The rear-axle drive motor controller is configure to, when the vehicle is in the stuck vehicle recovery mode, determine the required torque of the rear-axle drive motor based on the target speed and the actual speed of the rear-axle drive motor, correct the required torque of the rear-axle drive motor based on the front wheel speed and the rear wheel speed to obtain the output torque of the rear-axle drive motor, and control the rear wheels based on the output torque of the rear-axle drive motor. Thus, by calculating the required torque of the motor based on the target speed and the actual speed of the motor and correcting the required torque of the motor in real time based on the wheel speed, the closed-loop control of the motor speed is achieved by the vehicle, while the information interaction time is shortened, effectively solving the problem of vehicle slipping and getting stuck in sandy conditions without increasing the production cost of the vehicle.

Additional aspects and advantages of the present disclosure will be partially given in the following description, partially become apparent from the following description, or be understood through the application of the present disclosure.

## BRIEF DESCRIPTION OF THE DRAWINGS

FIG. 1 is a flowchart of a control method for a vehicle according to an embodiment of the present disclosure.
FIG. 2 is a flowchart of a control method for a vehicle according to a specific embodiment of the present disclosure.
FIG. 3 is a connection diagram of a control device for a vehicle according to an embodiment of the present disclosure.
FIG. 4 is a connection diagram of a vehicle according to an embodiment of the present disclosure.

## DETAILED DESCRIPTION OF THE EMBODIMENTS

The embodiments of the present disclosure are described in detail below. Examples of the embodiments are shown in the accompanying drawings, where the same or similar reference numerals indicate the same or similar elements or elements with the same or similar functions throughout. The embodiments described below with reference to the accompanying drawings are exemplary and are intended to explain the present disclosure, but should not be construed as limiting the present disclosure.

In the following, a control method for a vehicle, a control device for a vehicle, the computer-readable storage medium, and a vehicle provided by the embodiments of the present disclosure are described with reference to the accompanying drawings.

In related technologies, there are two common methods for four-wheel drive vehicles to escape in desert conditions:

Hardware optimization solution: by equipping the vehicle with a front-axle differential lock, a rear-axle differential lock, and a central differential lock, four wheels are connected together by a hardware structure, allowing the four wheels to be driven simultaneously and maintain a same wheel speed to get unstuck.

Software optimization solution: by equipping the vehicle with a front-axle differential lock and a rear-axle differential lock, but not a central differential lock, a vehicle slip rate and torque intervention is calculated by an Electronic Stability Program (ESP) unit based on wheel speeds of the four wheels, torque distributed to the front and rear-axles is then adjusted by a Vehicle Control Unit (VCU) based on the torque intervention, and then the wheels are controlled by a Motor Control Unit (MCU) based on the adjusted torque distributed to the front and rear-axles to avoid prolonged wheel slip that could lead to the vehicle getting stuck.

However, in the aforementioned hardware optimization solution, the installation of the central differential lock would increase the vehicle production cost. In the aforementioned software optimization solution, although the central differential lock is not installed, the process of adjusting the front and rear-axle torque through the wheel speed to the ESP, then to the VCU, finally to the MCU involves a long information interaction time, and there is still a risk of wheel slip and getting stuck in sandy conditions.

To address the aforementioned technical problems, the present disclosure provides a control method for a vehicle that is applicable to vehicles equipped with a front-axle drive motor and a rear-axle drive motor, and without a central differential lock, thereby reducing the application cost compared to the hardware optimization solution. Additionally, by calculating requested torque of a motor based on a target motor speed and an actual motor speed, and correcting the requested torque of the motor based on wheel speeds in real time, the method achieves closed-loop control of the motor speed, shortens the information interaction time, and effectively solves the problem of wheel slip and getting stuck in sandy conditions without increasing vehicle production costs.

The control method for the vehicle provided by embodiments of the present disclosure will be described in detail below with reference to the accompanying drawings.

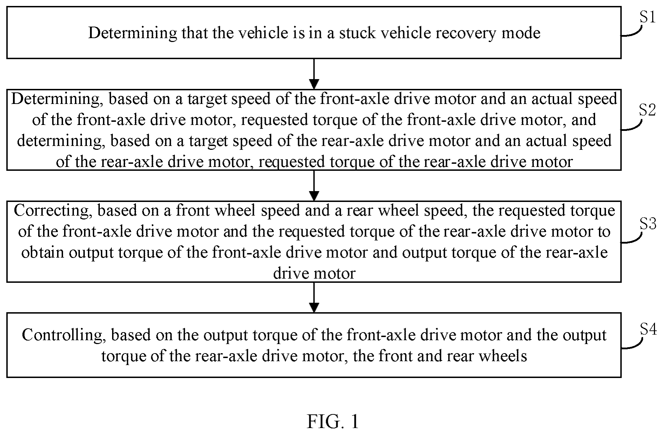

FIG. 1 is a flowchart of a control method for a vehicle according to an embodiment of the present disclosure.

In an embodiment of the present disclosure, the vehicle includes a front-axle drive motor and a rear-axle drive motor. The front-axle drive motor is configured to drive front wheels of the vehicle, and the rear-axle drive motor is configured to drive rear wheels of the vehicle.

As shown in FIG. 1, the control method for the vehicle according to an embodiment of the present disclosure may include:

S1: determining that the vehicle is in a stuck vehicle recovery mode.

S2: determining, based on a target speed of the front-axle drive motor and an actual speed of the front-axle drive motor, requested torque of the front-axle drive motor, and determining, based on a target speed of the rear-axle drive motor and an actual speed of the rear-axle drive motor, requested torque of the rear-axle drive motor.

S3: correcting, based on a front wheel speed and a rear wheel speed, the requested torque of the front-axle drive motor and the requested torque of the rear-axle drive motor to obtain output torque of the front-axle drive motor and output torque of the rear-axle drive motor.

S4: controlling, based on the output torque of the front-axle drive motor and the output torque of the rear-axle drive motor, the front and rear wheels.

Specifically, the stuck vehicle recovery mode is a response mode set when the vehicle slips and gets stuck in a sandy condition or the like. The stuck vehicle recovery mode and a corresponding trigger button maybe preset in a system of the vehicle. The trigger button may be either a physical button or a touch screen button, with no specific limitations. For example, when the vehicle is operating in an electric all-wheel drive Mode, if a driver selects the stuck vehicle recovery mode via the physical button or the touch screen button, the stuck vehicle recovery mode is triggered, and the vehicle enters the stuck vehicle recovery mode.

After the vehicle enters the stuck vehicle recovery mode, the target speed of the front-axle drive motor and the target speed of the rear-axle drive motor are determined, and the actual speed of the front-axle drive motor and the actual speed of the rear-axle drive motor are obtained based on a rotary speed sensor. Specifically, the requested torque of the front-axle drive motor is determined based on the speed difference between the target speed of the front-axle drive motor and the actual speed of the front-axle drive motor, and the requested torque of the rear-axle drive motor is obtained based on the speed difference between the target speed of the rear-axle drive motor and the actual speed of the rear-axle drive motor. For example, a mapping table between the speed difference and the requested torque may be pre-set, and the requested torque of the front-axle drive motor and the requested torque of the rear-axle drive motor may be determined by looking up the table during operation. Alternatively, the requested torque of the front-axle drive motor and the requested torque of the rear-axle drive motor can be obtained based on Proportional Integral (PI) control or Proportional Integral Derivative (PID) control methods, which will not be limited specifically. Additionally, the target speed of the front-axle drive motor and the target speed of the rear-axle drive motor may be determined by looking up the table or calculating based on parameters such as a user-set target speed and vehicle operation modes.

After determining the requested torque of the front-axle drive motor and the requested torque of the rear-axle drive motor, the front wheel speed and the rear wheel speed are obtained through sensors. For am all-wheel drive vehicle, the front wheel speed includes a left front wheel speed and a right front wheel speed, and the rear wheel speed includes a left rear wheel speed and a right rear wheel speed. The front wheel speed and the rear wheel speed are used to determine whether the front-axle or the rear-axle is slipping. For example, an average of the left front wheel speed and the right front wheel speed is taken as the front wheel speed, and an average of the left rear wheel speed and the right rear wheel speed is taken as the rear wheel speed. If the front wheel speed is greater than the rear wheel speed and the speed difference exceeds the first speed threshold, it is determined that the front-axle is slipping. If the rear wheel speed is greater than the front wheel speed and the speed difference exceeds the first speed threshold, it is determined that the rear-axle is slipping. Then, based on the slipping condition, the required torque of the front-axle drive motor and the required torque of the rear-axle drive motor are corrected to obtain the output torque of the front-axle drive motor and the output torque of the rear-axle drive motor. For example, if the front-axle slips, the required torque of the front-axle drive motor is reduced, and the required torque of the rear-axle drive motor is increased; if the rear-axle slips, the required torque of the front-axle drive motor is increased, and the required torque of the rear-axle drive motor is reduced. Then, the front wheels of the vehicle are controlled with the corrected output torque of the front-axle drive motor, and the rear wheels of the vehicle are controlled with the corrected output torque of the rear-axle drive motor, thereby effectively suppressing vehicle slipping.

Thus, this embodiment is applicable to vehicles without a central differential lock, and by calculating the required torque of the motor based on the target speed and the actual speed of the motor, and correcting the required torque of the motor based on the wheel speed, the information interaction time can be shortened, and the output torque of the motor can be quickly adjusted after the wheel slips, avoiding the wheel being in a slipping state for a long time.

In an embodiment of the present disclosure, the step of determining the required torque of the front-axle drive motor based on the target speed of the front-axle drive motor and the actual speed of the front-axle drive motor includes: obtaining a vehicle target speed; determining, based on the vehicle target speed, a transmission ratio of the front-axle drive motor and a tire circumference of the front wheel, the target speed of the front-axle drive motor; performing proportional integral control on a difference between the target speed of the front-axle drive motor and the actual speed of the front-axle drive motor to obtain the required torque of the front-axle drive motor.

Therein, the vehicle target speed is a desired driving speed set by a driver or a vehicle control system. The transmission ratio of the front-axle drive motor is a speed ratio between an input shaft and an output shaft of the front-axle transmission. A speed of a drive motor is defined as its rotational frequency, usually expressed in revolutions per minute (rpm). The tire circumference is calculated by a wheel diameter or radius, and the formula is $C = \pi d$ or $C = 2\pi r$. The transmission ratio of the front-axle drive motor and the tire circumference of the front wheel may be predetermined and stored, and directly retrieved during application.

Specifically, the required torque of the front-axle drive motor may be calculated by the following formulas:

$$r_{tf} = v_t \div 60*1000 \div C_{tf}*R_{tf}.$$

Therein, $r_{tf}$ represents the target speed of the front-axle drive motor, measured in revolution per minute (rpm); $v_t$ represents the target vehicle speed, measured in kilometers per hour (km/h); $C_{tf}$ represents the tire circumference of the front wheel, measured in meter (m); and $R_{tf}$ represents the transmission ratio of the front-axle drive motor.

$$\Delta nf = r_{tf} - r_{af}$$

Therein, $\Delta nf$ represents the difference between the target speed of the front-axle drive motor and the actual speed of the front-axle drive motor; and $r_{af}$ represents the actual speed of the front-axle drive motor, measured in revolution per minute (rpm).

$$T_{rf} = Kp * \Delta nf + Ki * \int_0^t \Delta nf dt$$

Therein, $T_{rf}$ represents the torque of the front-axle drive motor; $Kp$ represents a proportional gain coefficient, $Ki$ represents an integral gain coefficient, $Kp * \Delta nf$ represents proportional control modulation torque; $Ki * \int_0^t \Delta nf dt$ represents integral control modulation torque, and $t$ is a duration of the speed control.

In an embodiment of the present disclosure, the step of determining, based on the target speed of the rear-axle drive motor and actual speed of the rear-axle drive motor, the required torque of the rear-axle drive motor includes: obtaining a vehicle target speed; determining, based on the vehicle target speed, a transmission ratio of the rear-axle drive motor and a tire circumference of the rear wheel, the target speed of the rear-axle drive motor; performing proportional integral control on a difference between the target speed of the rear-axle drive motor and the actual speed of the rear-axle drive motor to obtain the required torque of the rear-axle drive motor. Therein, the transmission ratio of the rear-axle drive motor is a speed ratio between an input shaft and an output shaft of the rear-axle transmission.

Specifically, the transmission ratio of the rear-axle drive motor and the tire circumference of the rear wheel may be predetermined and stored, and directly retrieved during application.

For example, the required torque of the rear-axle drive motor may be calculated by the following formulas:

$$r_{tr} = v_t \div 60 * 1000 \div C_{tr} * R_{tr}$$

Therein, $r_{tr}$ represents the target speed of the rear-axle drive motor, measured in revolution per minute (rpm); vt represents the target vehicle speed, measured in kilometers per hour (km/h); $C_{tr}$ represents the tire circumference of the rear wheel, measured in meter (m); and $R_{tr}$ represents the transmission ratio of the rear-axle drive motor.

$$\Delta nr = r_{tr} - r_{ar}$$

Therein, $\Delta nr$ represents the difference between the target speed of the rear-axle drive motor and the actual speed of the rear-axle drive motor; and $r_{ar}$ represents the actual speed of the rear-axle drive motor, measured in revolution per minute (rpm).

$$T_{rr} = Kp * \Delta nr + Ki * \int_0^t \Delta nr dt.$$

Therein, $T_{rr}$ represents the torque of the rear-axle drive motor; Kp represents a proportional gain coefficient, Ki represents an integral gain coefficient, Kp * $\Delta nr$ represents proportional control modulation torque; $Ki * \int_0^t \Delta nr dt$ represents integral control modulation torque, and t is a duration of the speed control.

Furthermore, in related technologies, a conventional control method of motor torque includes: calculating, based on information such as a vehicle speed, a driving mode, an accelerator pedal position, and a slope, total vehicle requested torque by the VCU, and then calculating, based on information such as efficiency of the front-axle drive motor and the rear-axle drive motor and the driving mode, torque distributed to the front-axle drive motor and rear-axle drive motor; and outputting the torque by the front-axle drive motor and the rear-axle drive motor according to the torque request from the VCU. The motor torque obtained by this control method does not reference the motor speed, and the motor speed is in an open-loop state. When the motor speed surges or the wheels slip, it is unable to reduce the motor torque in time to prevent slipping. On high-friction roads, because the friction between the wheels and the ground is high and slipping is less likely, vehicle's power performance and driving smoothness may be met by this control method. However, in sandy conditions, because the friction between the wheels and the ground is low, the wheels are prone to slipping, further causing the vehicle to excavate the ground beneath it and get stuck because the motor output torque cannot be reduced in time.

In this embodiment, when the vehicle is in the stuck vehicle recovery mode, the requested torque of the motor may be calculated in real time based on the speed difference between the target speed and the actual speed of the motor. Therefore, when the speed difference is large, a larger torque is output by the motor to make the motor speed closer to the target speed. When the speed difference is small, it indicates that the actual motor speed is close to the target speed, and a smaller torque is output by the motor to reduce the probability of wheel slipping. Thus, even if the wheels slip, i.e., the actual motor speed exceeds the target speed, since the speed difference is negative, a negative torque may be output to quickly reduce the motor speed, so that the wheels may exit the slipping state quickly. Therefore, in this embodiment, the PI control is performed based on the difference between the target motor speed and the actual motor speed to calculate the requested torque of the motor, keeping the motor speed in a closed-loop control state, which can effectively suppress wheel slipping in sandy conditions.

In one embodiment of the present disclosure, the step of the correcting, based on a front wheel speed and a rear wheel speed, the requested torque of the front-axle drive motor and the requested torque of the rear-axle drive motor to obtain output torque of the front-axle drive motor and output torque of the rear-axle drive motor includes the following steps: when a first speed difference between a minimum value of the front wheel speed and a maximum value of the rear wheel speed is greater than a preset vehicle speed threshold, determining, based on the first speed difference, a first torque reduction coefficient; when a second speed difference between a minimum value of the rear wheel speed and a maximum value of the front wheel speed is greater than the preset vehicle speed threshold, determining, based on the second speed difference, a second torque reduction coefficient; correcting, based on the first torque reduction coefficient, the front-axle drive requested torque to obtain the output torque of the front-axle drive motor; correcting, based on the second torque reduction coefficient, the rear-axle drive requested torque to obtain the output torque of the rear-axle drive motor. Therein, the preset speed threshold may be set according to actual conditions, and there is no specific limitation.

Specifically, taking the preset speed threshold as 0 km/h as an example, a left front wheel speed, a right front wheel speed, a left rear wheel speed, and a right rear wheel speed are obtained through sensors, and the first torque reduction coefficient and second torque reduction coefficient are determined based on the left front wheel speed, the right front wheel speed, the left rear wheel speed, and the right rear wheel speed.

Specifically, a smaller value of the left front wheel speed and the right front wheel speed is taken as the minimum front wheel speed, and a larger value of the left rear wheel speed and the right rear wheel speed is taken as the maximum rear wheel speed. Then, the speed difference between the minimum front wheel speed and the maximum rear wheel speed is calculated to obtain the first speed difference. When the first speed difference is greater than 0 km/h, it is determined that front-axle slipping has occurred, and torque reduction should be preformed to the front axle, that is, reducing the requested torque of the front-axle drive motor to avoid slipping. At this time, the first torque reduction coefficient should be in a range of (0, 1). When the first speed difference is less than or equal to 0 km/h, the requested torque of the front-axle motor remains unchanged, and the first torque reduction coefficient is always 1. For example, a mapping table (e.g., Table 1) between the first torque reduction coefficient and the first speed difference may be preset. During the control process, the first torque reduction coefficient is determined by looking up the table based on the calculated first speed difference. Alternatively, a function calculation formula between the torque reduction coefficient and the speed difference may be preset. During the control process, the first torque reduction coefficient is obtained by substituting the calculated first speed difference into the preset function calculation formula, which may be applied based on actual conditions. Then, the requested torque of the front-axle drive motor is corrected based on the first torque reduction coefficient, and the output torque of the front-axle drive motor is obtained by the following formula:

Output torque of the front-axle drive motor = requested torque of the front-axle drive motor * first torque reduction coefficient.

Table 1

| speed difference (km/h) | ... | -20 | -10 | -5 | 0 | 5 | 10 | 15 | 20 | 25 | ... |
|---|---|---|---|---|---|---|---|---|---|---|---|
| torque reduction coefficient | ... | 1 | 1 | 1 | 1 | 0.98 | 0.95 | 0.90 | 0.85 | 0.80 | ... |

A smaller value of the left rear wheel speed and right rear wheel speed is taken as the minimum rear wheel speed, and a larger value of the left front wheel speed and right front wheel speed is taken as the maximum front wheel speed. Then, the speed difference between the minimum rear wheel speed and the maximum front wheel speed is calculated to obtain the second speed difference. When the second speed difference is greater than 0 km/h, it is determined that rear-axle slipping has occurred, and torque reduction should be preformed to the rear axle, that is, reducing the requested torque of the rear-axle drive motor to avoid slipping. At this time, the second torque reduction coefficient should be in a range of (0, 1), and the larger the second speed difference is, the smaller the second torque reduction coefficient is. When the second speed difference is less than or equal to 0 km/h, the requested torque of the rear-axle drive motor remains unchanged, and the second torque reduction coefficient is always 1. Referring to the method of obtaining the first torque reduction coefficient mentioned above, the second torque reduction coefficient may also be determined by looking up the table based on the calculated second speed difference during the control process, or by substituting the obtained second speed difference into a preset function calculation formula to calculate the second torque reduction coefficient. There is no specific limitation. Then, the requested torque of the rear-axle drive motor is corrected based on the second torque reduction coefficient, and the output torque of the rear-axle drive motor is obtained by the following formula:

Output torque of the rear-axle drive motor = rear-axle drive requested torque * second torque reduction coefficient.

In one embodiment of the present disclosure, the step of the correcting, based on a front wheel speed and a rear wheel speed, the requested torque of the front-axle drive motor and the requested torque of the rear-axle drive motor to obtain output torque of the front-axle drive motor and output torque of the rear-axle drive motor includes the following steps: when a third speed difference between a maximum value of the front wheel speed and a minimum value of the rear wheel speed is less than a preset vehicle speed threshold, determining, based on the third speed difference, a first torque increase coefficient; when a fourth speed difference between a maximum value of the rear wheel speed and a minimum value of the front wheel speed is less than the preset vehicle speed threshold, determining, based on the fourth speed difference, a second torque increase coefficient;correcting, based on the first torque increase coefficient, the front-axle drive requested torque to obtain the output torque of the front-axle drive motor; and correcting, based on the second torque increase coefficient, the rear-axle drive requested torque to obtain the output torque of the rear-axle drive motor.

Specifically, continuing to taking the preset speed threshold as 0 km/h as an example, the left front wheel speed, the right front wheel speed, the left rear wheel speed, and the right rear wheel speed are obtained through the sensors, and the first torque increase coefficient and second torque increase coefficient are determined based on the left front wheel speed, the right front wheel speed, the left rear wheel speed, and the right rear wheel speed.

Specifically, a larger value of the left front wheel speed and the right front wheel speed is taken as the maximum front wheel speed, and a smaller value of the left rear wheel speed and the right rear wheel speed is taken as the minimum rear wheel speed. Then, the speed difference between the maximum front wheel speed and the minimum rear wheel speed is calculated to obtain the third speed difference. When the third speed difference is less than 0 km/h, the requested torque of the front-axle drive motor should be increased, and the first torque increase coefficient should be in a range of (1, +∞). When the third speed difference is greater than or equal to 0 km/h, the requested torque of the front-axle drive motor remains unchanged, and the first torque increase coefficient is always 1. For example, a mapping table (e.g., Table 2) between the first torque increase coefficient and the third speed difference may be preset. During the control process, the first torque increase coefficient is determined by looking up the table based on the calculated third speed difference. Alternatively, a function calculation formula between the torque increase coefficient and the speed difference may be preset. During the control process, the first torque increase coefficient is obtained by substituting the calculated third speed difference into the preset function calculation formula, which may be applied based on actual conditions. Then, the requested torque of the front-axle drive motor is corrected based on the first torque increase coefficient, and the output torque of the front-axle drive motor is obtained by the following formula:

Output torque of the front-axle drive motor = requested torque of the front-axle drive motor * first torque increase coefficient.

Table 2

| speed difference (km/h) | ... | -25 | -20 | -15 | -10 | -5 | 0 | 5 | 10 | 15 | ... |
|---|---|---|---|---|---|---|---|---|---|---|---|
| torque reduction coefficient | ... | 1.20 | 1.15 | 1.10 | 1.05 | 1.02 | 1 | 1 | 1 | 1 | ... |

A larger value of the left rear wheel speed and the right rear wheel speed is taken as the maximum rear wheel speed, and a smaller value of the left front wheel speed and the right front wheel speed is taken as the minimum front wheel speed. Then, the speed difference between the maximum rear wheel speed and the minimum front wheel speed is calculated to obtain the fourth speed difference. When the fourth speed difference is less than 0 km/h, the requested torque of the rear-axle drive motor should be increased, and the second torque increase coefficient should be in a range of (1, +∞). When the fourth speed difference is greater than or equal to 0 km/h, the requested torque of the rear-axle drive motor remains unchanged, and the second torque increase coefficient is always 1. Referring to the method of obtaining the first torque increase coefficient mentioned above, the second torque increase coefficient may also be determined by looking up the table based on the calculated fourth speed difference during the control process, or by substituting the obtained fourth speed difference into a preset function calculation formula to calculate the second torque increase coefficient. There is no specific limitation. Then the requested torque of the rear-axle drive motor is corrected based on the second torque increase coefficient, and the output torque of the rear-axle drive motor is obtained by the following formula:

Output torque of the rear-axle drive motor = requested torque of the rear-axle drive motor * second torque increase coefficient.

Furthermore, in related technologies, a conventional control method for vehicle to suppress slipping includes: calculating, based on a wheel speed, a wheel slip rate by ESP; adjusting distribution of the front-axle torque and the rear-axle torque by VCU; outputting torque by the front-axle motor and the rear-axle motor, thereby suppressing the wheel slipping. However, in this embodiment, correction coefficients (first torque reduction coefficient, first torque increase coefficient, second torque reduction coefficient, and second torque increase coefficient) for the requested torque of the front-axle drive motor and the rear-axle drive motor are determined through the wheel speeds, and the requested torque of the front-axle drive motor and the rear-axle drive motor is corrected based on the coefficients to obtain the output torque of the front-axle drive motor and rear-axle drive motor. That is, output torque of the front-axle drive motor = requested torque of the front-axle drive motor * first torque reduction coefficient * first torque increase coefficient; output torque of the rear-axle drive motor = requested torque of the rear-axle drive motor * second torque reduction coefficient * second torque increase coefficient. This technical solution can shorten the information interaction time, and quickly adjust the motor output torque after the wheel slips to avoid the wheel being in a slipping state for a long time.

In one embodiment of the disclosure, the control method for the vehicle may further includes: determining, based on the actual speed of the front-axle drive motor and a voltage value of the front-axle drive motor, external characteristic torque of the front-axle drive motor, and taking a smaller value between the external characteristic torque of the front-axle drive motor and the output torque of the front-axle drive motor as a final output torque of the front-axle drive motor; and determining, based on the actual speed of the rear-axle drive motor and a voltage value of the rear-axle drive motor, external characteristic torque of the rear-axle drive motor, and taking a smaller value between the external characteristic torque of the rear-axle drive motor and the output torque of the rear-axle drive motor as a final output torque of the rear-axle drive motor.

Specifically, the external characteristic torque of the front-axle drive motor may be set based on motor parameters of the front-axle drive motor, and is used to characterize a maximum torque that the front-axle drive motor can output at different speeds and voltages. The external characteristic torque of the rear-axle drive motor may be set based on motor parameters of the rear-axle drive motor, and is used to characterize a maximum torque that the rear-axle drive motor can output at different speeds and voltages. In practical applications, a preset mapping table between the motor speed, the motor voltage and the external characteristic torque of the motor may be preset. During the control process, the external characteristic torque of the front-axle drive motor and the external characteristic torque of the rear-axle drive motor are obtained by looking up the table. Alternatively, a preset calculation function between the motor speed, the motor voltage and the external characteristic torque of the motor may be preset. During the control process, the obtained motor speed and motor voltage are substituted into the preset calculation function to calculate the external characteristic torque of the motor. There is no specific limitation.

The following takes the method of determining the external characteristic torque of the front-axle drive motor and the external characteristic torque of the rear-axle drive motor by looking up the table as an example to illustrate the control method for the vehicle.

After correcting the requested torque of the front-axle drive motor through the front wheel speed and the rear wheel speed to obtain the output torque of the front-axle drive motor, the external characteristic torque of the front-axle drive motor is obtained by looking up the table based on the actual speed of the front-axle drive motor and the voltage value of the front-axle drive motor obtained by the sensor. A smaller value between the output torque of the front-axle drive motor and the external characteristic torque of the front-axle drive motor is taken as the final output torque of the front-axle drive motor for the front wheel control.

After correcting the requested torque of the rear-axle drive motor through the front wheel speed and rear wheel speed to obtain the output torque of the rear-axle drive motor, the external characteristic torque of the rear-axle drive motor is obtained by looking up the table based on the actual speed of the rear-axle drive motor and the voltage value of the rear-axle drive motor obtained by the sensor. A smaller value between the output torque of the rear-axle drive motor and the external characteristic torque of the rear-axle drive motor is taken as the final output torque of the rear-axle drive motor for the rear wheel control.

In this embodiment, the smaller value between the output torque and the external characteristic torque is determined for wheel control to avoid the output torque exceeding the a preset capability range of the motor and causing motor fault reports.

In an embodiment of the disclosure, the vehicle further includes a front-axle differential lock and a rear-axle differential lock. When the vehicle is in the stuck vehicle recovery mode, the front-axle differential lock and the rear-axle differential lock are in a locked state.

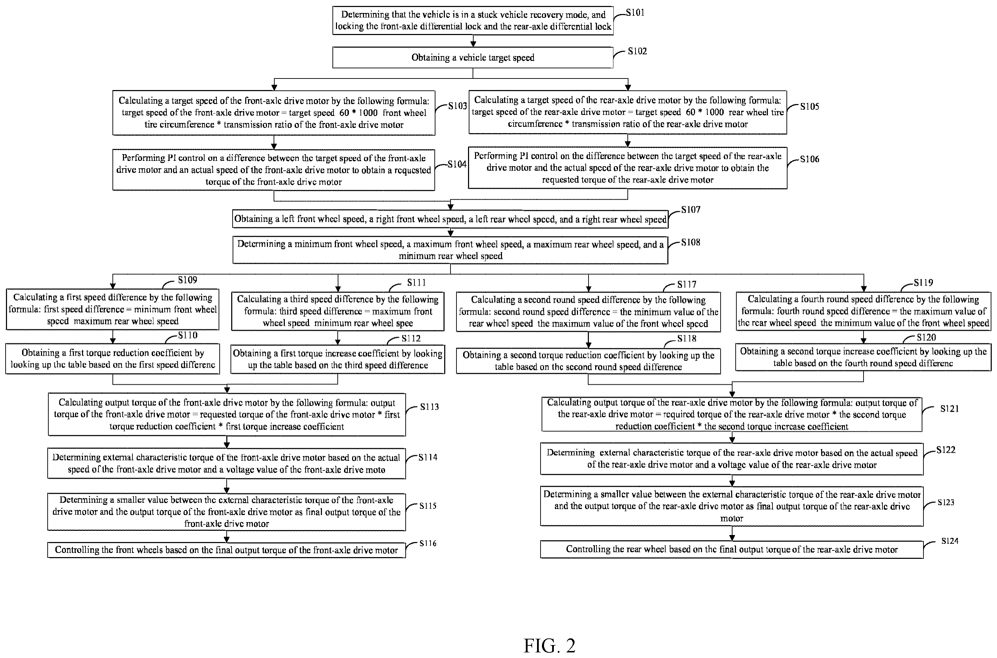

Specifically, the front-axle differential lock is used to lock wheels on both sides of the front-axle. The rear-axle differential lock is used to lock wheels on both sides of the rear-axle. When the vehicle is in the stuck vehicle recovery mode, the front-axle differential lock and the rear-axle differential lock are locked to lock the wheels on both sides of the front-axle through the front-axle differential lock and lock the wheels on both sides of the rear-axle through the rear-axle differential lock, to prevent one side of the wheels from slipping due to snow, ice, mud, or suspension, so that the vehicle may get unstuck easily. As a specific embodiment of the present disclosure, the control method of the vehicle is shown in FIG. 2, including the following steps.

S101: determining that the vehicle is in a stuck vehicle recovery mode, and locking the front-axle differential lock and the rear-axle differential lock.

S102: obtaining a vehicle target speed. Proceed to steps S103 and S105 respectively.

S103: calculating a target speed of the front-axle drive motor by the following formula: target speed of the front-axle drive motor = target speed ÷ 60 * 1000 ÷ front wheel tire circumference * transmission ratio of the front-axle drive motor.

S104: performing PI control on a difference between the target speed of the front-axle drive motor and an actual speed of the front-axle drive motor to obtain a requested torque of the front-axle drive motor. Execute step S107.

S105: calculating a target speed of the rear-axle drive motor by the following formula: target speed of the rear-axle drive motor = target speed ÷ 60 * 1000 ÷ rear wheel tire circumference * transmission ratio of the rear-axle drive motor.

S106: performing PI control on the difference between the target speed of the rear-axle drive motor and the actual speed of the rear-axle drive motor to obtain the requested torque of the rear-axle drive motor.

S107: obtaining a left front wheel speed, a right front wheel speed, a left rear wheel speed, and a right rear wheel speed.

S108: determining a minimum front wheel speed, a maximum front wheel speed, a maximum rear wheel speed, and a minimum rear wheel speed. Execute steps S109, S111, S117, and S119 respectively.

S109: calculating a first speed difference by the following formula: first speed difference = minimum front wheel speed - maximum rear wheel speed.

S110: obtaining a first torque reduction coefficient by looking up the table based on the first speed difference.

S111: calculating a third speed difference by the following formula: third speed difference = maximum front wheel speed - minimum rear wheel speed.

S112: obtaining a first torque increase coefficient by looking up the table based on the third speed difference.

S113: calculating output torque of the front-axle drive motor by the following formula: output torque of the front-axle drive motor = requested torque of the front-axle drive motor * first torque reduction coefficient * first torque increase coefficient.

S114: determining external characteristic torque of the front-axle drive motor based on the actual speed of the front-axle drive motor and a voltage value of the front-axle drive motor.

S115: determining a smaller value between the external characteristic torque of the front-axle drive motor and the output torque of the front-axle drive motor as final output torque of the front-axle drive motor.

S116: controlling the front wheels based on the final output torque of the front-axle drive motor.

S117: calculating a second round speed difference by the following formula: second round speed difference = the minimum value of the rear wheel speed - the maximum value of the front wheel speed.

S118: obtaining a second torque reduction coefficient by looking up the table based on the second round speed difference.

S119: calculating a fourth round speed difference by the following formula: fourth round speed difference = the maximum value of the rear wheel speed - the minimum value of the front wheel speed;

S120: obtaining a second torque increase coefficient by looking up the table based on the fourth round speed difference.

S121: calculating output torque of the rear-axle drive motor by the following formula: output torque of the rear-axle drive motor = required torque of the rear-axle drive motor * the second torque reduction coefficient * the second torque increase coefficient.

S122: determining external characteristic torque of the rear-axle drive motor based on the actual speed of the rear-axle drive motor and a voltage value of the rear-axle drive motor.

S123: determining a smaller value between the external characteristic torque of the rear-axle drive motor and the output torque of the rear-axle drive motor as final output torque of the rear-axle drive motor.

S124: controlling the rear wheel based on the final output torque of the rear-axle drive motor.

In view of above, according to the control method for the vehicle provided by the embodiments of the present disclosure, the vehicle includes a front-axle drive motor and a rear-axle drive motor. The front-axle drive motor is configured to drive front wheels of the vehicle, and the rear-axle drive motor is configured to drive rear wheels of the vehicle. According to the control method for the vehicle, firstly, it is determined that the vehicle is in a stuck vehicle recovery mode, and required torque of the front-axle drive motor is determined based on a target speed of the front-axle drive motor and an actual speed of the front-axle drive motor, and required torque of the rear-axle drive motor is determined based on a target speed of the rear-axle drive motor and an actual speed of the rear-axle drive motor. The required torque of the front-axle drive motor and the required torque of the rear-axle drive motor are then corrected based on a front wheel speed and a rear wheel speed to obtain output torque of the front-axle drive motor and output torque of the rear-axle drive motor. The front wheels and the rear wheels are controlled based on the output torque of the front-axle drive motor and the output torque of the rear-axle drive motor. Thus, this method is applicable to vehicles not equipped with a central differential lock. By calculating the requested torque of the motor based on the target motor speed and the actual motor speed and correcting the requested torque of the motor based on the wheel speed in real time, the closed-loop control of the motor speed is achieved, while the information interaction time is shortened, effectively solving the problem of wheel slip and vehicle sinking in sandy conditions without increasing the production cost of the vehicle.

Corresponding to the above embodiments, the present disclosure further provides a control device for a vehicle.

According to an embodiment of the present disclosure, the vehicle includes a front-axle drive motor and a rear-axle drive motor. The front-axle drive motor is configured to drive front wheels of the vehicle, and the rear-axle drive motor is configured to drive rear wheels of the vehicle.

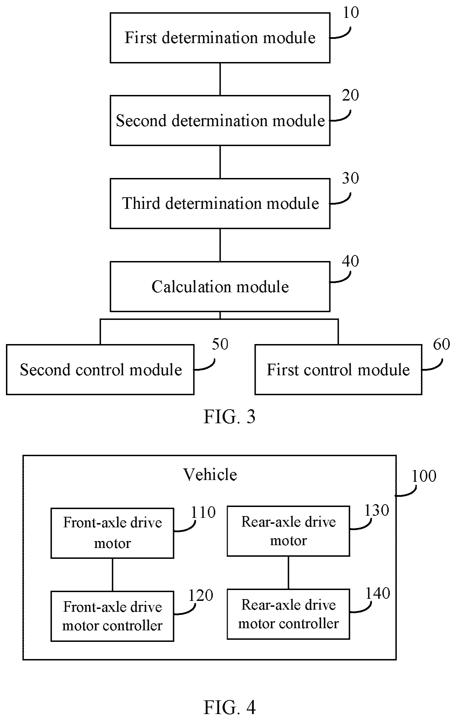

As shown in FIG. 3, the control device for the vehicle provided by the embodiment of the present disclosure may include: a first determination module 10, a second determination module 20, a third determination module 30, a calculation module 40, a first control module 50, and a second control module 60.

The first determination module 10 is configured to determine that the vehicle is in a stuck vehicle recovery mode. The second determination module 20 is configured to determine, based on a target speed of the front-axle drive motor and an actual speed of the front-axle drive motor, a required torque of the front-axle drive motor. The third determination module 30 is configured to determine, based on a target speed of the rear-axle drive motor and an actual speed of the rear-axle drive motor, a required torque of the rear-axle drive motor. The calculation module 40 is configured to correct, based on a front wheel speed and a rear wheel speed, the required torque of the front-axle drive motor and the required torque of the rear-axle drive motor to obtain output torque of the front-axle drive motor and output torque of the rear-axle drive motor. The first control module 50 is configured to control, based on the output torque of the front-axle drive motor, the front wheels. The second control module 60 is configured to control, based on the output torque of the rear-axle drive motor, the rear wheels.

According to an embodiment of the present disclosure, when executing the correcting, based on a front wheel speed and a rear wheel speed, the required torque of the front-axle drive motor and the required torque of the rear-axle drive motor to obtain output torque of the front-axle drive motor and output torque of the rear-axle drive motor by the calculation module 40, the calculation module 40 is specifically configured to: when a first speed difference between a minimum value of the front wheel speed and a maximum value of the rear wheel speed is greater than a preset vehicle speed threshold, determine, based on the first speed difference, a first torque reduction coefficient; when a second speed difference between a minimum value of the rear wheel speed and a maximum value of the front wheel speed is greater than the preset vehicle speed threshold, determine, based on the second speed difference, a second torque reduction coefficient; correct, based on the first torque reduction coefficient, the front-axle drive requested torque to obtain the output torque of the front-axle drive motor; and correct, based on the second torque reduction coefficient, the rear-axle drive requested torque to obtain the output torque of the rear-axle drive motor.

According to an embodiment of the present disclosure, when executing the correcting, based on a front wheel speed and a rear wheel speed, the required torque of the front-axle drive motor and the required torque of the rear-axle drive motor to obtain output torque of the front-axle drive motor and output torque of the rear-axle drive motor by the calculation module 40, the calculation module 40 is specifically configured to: when a third speed difference between a maximum value of the front wheel speed and a minimum value of the rear wheel speed is less than a preset vehicle speed threshold, determine, based on the third speed difference, a first torque increase coefficient; when a fourth speed difference between a maximum value of the rear wheel speed and a minimum value of the front wheel speed is less than the preset vehicle speed threshold, determine, based on the fourth speed difference, a second torque increase coefficient; correct, based on the first torque increase coefficient, the front-axle drive requested torque to obtain the output torque of the front-axle drive motor; and correct, based on the second torque increase coefficient, the rear-axle drive requested torque to obtain the output torque of the rear-axle drive motor.

According to an embodiment of the present disclosure, when executing the determining, based on a target speed of the front-axle drive motor and an actual speed of the front-axle drive motor, requested torque of the front-axle drive motor by the second determination module 20, the second determination module 20 is specifically configured to: obtain a target vehicle speed; determine, based on the target vehicle speed, a transmission ratio of the front-axle drive motor, and a tire circumference of the front wheel, the target speed of the front-axle drive motor; and perform proportional-integral control on a difference between the target speed of the front-axle drive motor and the actual speed of the front-axle drive motor to obtain the front-axle drive motor required torque.

According to an embodiment of the present disclosure, when executing the determining, based on a target speed of the rear-axle drive motor and an actual speed of the rear-axle drive motor, requested torque of the rear-axle drive motor by the third determination module 30, the third determination module 30 is specifically configured to: obtain a target vehicle speed; determine, based on the target vehicle speed, a transmission ratio of the rear-axle drive motor, and a tire circumference of the rear wheel, the target speed of the rear-axle drive motor; and perform proportional-integral control on a difference between the target speed of the rear-axle drive motor and the actual speed of the rear-axle drive motor to obtain the rear-axle drive motor required torque.

According to an embodiment of the present disclosure, the first control module 50 is further configured to: determine, based on the actual speed of the front-axle drive motor and a voltage value of the front-axle drive motor, external characteristic torque of the front-axle drive motor, and taking a smaller value between the external characteristic torque of the front-axle drive motor and the output torque of the front-axle drive motor as the output torque of the front-axle drive motor; and the second control module 60 is further configured to: determine, based on the actual speed of the rear-axle drive motor and a voltage value of the rear-axle drive motor, external characteristic torque of the rear-axle drive motor, and taking a smaller value between the external characteristic torque of the rear-axle drive motor and the output torque of the rear-axle drive motor as the output torque of the rear-axle drive motor.

According to an embodiment of the present disclosure, the vehicle further includes a front-axle differential lock and a rear-axle differential lock. When it is determined that the vehicle is in the stuck vehicle recovery mode, the front-axle differential lock and the rear-axle differential lock are in a locked state.

It should be noted that details not disclosed in the control device for the vehicle in the embodiments of the present disclosure can be referred to the details disclosed in the control method for the vehicle in the above embodiments of the present disclosure, and will not be repeated here.

According to the control device of the vehicle provided by the embodiment of the present disclosure, the vehicle includes the front-axle drive motor and the rear-axle drive motor. The front-axle drive motor is configured to drive the front wheels of the vehicle, and the rear-axle drive motor is configured to drive the rear wheels of the vehicle. The control device of the vehicle is configured to determine that the vehicle is in the stuck vehicle recovery mode through the first determination module, determine the required torque of the front-axle drive motor through the second determination module based on the target speed and the actual speed of the front-axle drive motor, determine the required torque of the rear-axle drive motor through the third determination module based on the target speed and the actual speed of the rear-axle drive motor, correct the required torque of the front-axle drive motor and the required torque of the rear-axle drive motor through the calculation module based on the front wheel speed and the rear wheel speed to obtain the output torque of the front-axle drive motor and the output torque of the rear-axle drive motor, control the front wheels through the first control module based on the output torque of the front-axle drive motor, and control the rear wheels through the second control module based on the output torque of the rear-axle drive motor. Thus, the device is applicable to vehicles not equipped with a central differential lock. By calculating the required torque of the motor based on the target speed and the actual speed of the motor and correcting the required torque of the motor in real time based on the wheel speed, the closed-loop control of the motor speed is achieved, while the information interaction time is shortened, effectively solving the problem of vehicle slipping and getting stuck in sandy conditions without increasing the production cost of the vehicle.

Corresponding to the above embodiments, the present disclosure further provides a computer-readable storage medium.

The computer-readable storage medium provided by the embodiment of the present disclosure has a vehicle control program stored thereon, and when the vehicle control program is executed by a processor, the above-mentioned control method for the vehicle is implemented.

According to the computer-readable storage medium in the embodiment of the present disclosure, when the vehicle control program is executed by the processor, the above-mentioned control method for the vehicle is implemented. Based on the above-mentioned control method for the vehicle, the closed-loop control of the motor speed is achieved, while the information interaction time is shortened, effectively solving the problem of vehicle slipping and getting stuck in sandy conditions without increasing the production cost of the vehicle.

Corresponding to the above embodiments, the present disclosure further provides a vehicle.

As shown in FIG. 4, according to an embodiment of the present disclosure, the vehicle 100 includes: a front-axle drive motor 110, a front-axle drive motor controller 120, a rear-axle drive motor 130, and a rear-axle drive motor controller 140. Therein, the front-axle drive motor controller 120 is configured to, when the vehicle is in a stuck vehicle recovery mode, determine, based on a target speed of the front-axle drive motor and an actual speed of the front-axle drive motor, a required torque of the front-axle drive motor, and correct, based on a front wheel speed and a rear wheel speed, the required torque of the front-axle drive motor to obtain output torque of the front-axle drive motor, and control, based on the output torque of the front-axle drive motor, the front wheels. The rear-axle drive motor controller 140 is configured to, when the vehicle is in the stuck vehicle recovery mode, determine, based on a target speed of the rear-axle drive motor and an actual speed of the rear-axle drive motor, a required torque of the rear-axle drive motor, and correct, based on the front wheel speed and the rear wheel speed, the required torque of the rear-axle drive motor to obtain output torque of the rear-axle drive motor, and control, based on the output torque of the rear-axle drive motor, the rear wheels.

According to the vehicle provided by the embodiment of the present disclosure, the front-axle drive motor controller is configure to, when the vehicle is in the stuck vehicle recovery mode, determine the required torque of the front-axle drive motor based on the target speed and the actual speed of the front-axle drive motor, correct the required torque of the front-axle drive motor based on the front wheel speed and the rear wheel speed to obtain the output torque of the front-axle drive motor, and control the front wheels based on the output torque of the front-axle drive motor. The rear-axle drive motor controller is configure to, when the vehicle is in the stuck vehicle recovery mode, determine the required torque of the rear-axle drive motor based on the target speed and the actual speed of the rear-axle drive motor, correct the required torque of the rear-axle drive motor based on the front wheel speed and the rear wheel speed to obtain the output torque of the rear-axle drive motor, and control the rear wheels based on the output torque of the rear-axle drive motor. Thus, by calculating the required torque of the motor based on the target speed and the actual speed of the motor and correcting the required torque of the motor in real time based on the wheel speed, the closed-loop control of the motor speed is achieved by the vehicle, while the information interaction time is shortened, effectively solving the problem of vehicle slipping and getting stuck in sandy conditions without increasing the production cost of the vehicle.

It should be noted that the logic and/or steps represented in the flowchart or described in other ways here, for example, can be considered as a sequenced list of executable instructions for implementing logical functions, which can be specifically implemented in any computer-readable medium for use by an instruction execution system, device, or equipment (such as a computer-based system, a system including a processor, or other systems that can fetch instructions from the instruction execution system, device, or equipment and execute the instructions), or used in combination with these instruction execution systems, devices, or equipment.For the purpose of this specification, a 'computer-readable medium' can be any device that can contain, store, communicate, propagate, or transmit a program for use by or in connection with an instruction execution system, device, or equipment.More specific examples (a non-exhaustive list) of computer-readable media include the following: electrical connection parts (electronic devices) with one or more wires, portable computer disk cartridges (magnetic devices), random access memory (RAM), read-only memory (ROM), erasable programmable read-only memory (EPROM or flash memory), fiber optic devices, and portable compact disc read-only memory (CDROM).In addition, the computer-readable medium can even be paper or other suitable medium on which the program can be printed, because the program can be obtained electronically by, for example, optically scanning the paper or other medium, followed by editing, interpreting, or other suitable processing if necessary, and then stored in computer memory.

It should be understood that various parts of the present disclosure can be implemented in hardware, software, firmware, or a combination thereof. In the above implementation, multiple steps or methods can be implemented by software or firmware stored in memory and executed by a suitable instruction execution system. For example, if implemented in hardware, as in another implementation, it can be implemented by any one of the following technologies well known in the art or a combination thereof: discrete logic circuits with logic gate circuits for implementing logical functions on data signals, application-specific integrated circuits with suitable combinational logic gate circuits, programmable gate arrays (PGA), field programmable gate arrays (FPGA), etc.

In the description of this specification, the description with reference to the terms 'one embodiment', 'some embodiments', 'example', 'specific example', or 'some examples' means that the specific features, structures, materials, or characteristics described in connection with the embodiment or example are included in at least one embodiment or example of the present disclosure. In this specification, the schematic description of the above terms does not necessarily refer to the same embodiment or example. Moreover, the specific features, structures, materials, or characteristics described can be combined in any one or more embodiments or examples in a suitable manner.

In addition, the terms 'first' and 'second' are used for descriptive purposes only and should not be understood as indicating or implying relative importance or implicitly specifying the number of indicated technical features. Thus, features defined with 'first' and 'second' may explicitly or implicitly include at least one such feature. In the description of the present disclosure, the meaning of 'a plurality' is at least two, such as two, three, etc., unless explicitly and specifically defined otherwise.

In the present disclosure, unless otherwise explicitly specified and defined, terms such as 'install', 'connected', 'connection', 'fixed' should be understood in a broad sense, for example, they can be fixed connections, detachable connections, or integrated; they can be mechanical connections or electrical connections; they can be directly connected or indirectly connected through an intermediary, and they can be the internal communication of two components or the interaction relationship between two components, unless explicitly defined otherwise. For those of ordinary skill in the art, the specific meanings of the above terms in the present disclosure can be understood according to specific circumstances.

Although the embodiments of the present disclosure have been shown and described above, it should be understood that the above embodiments are exemplary and should not be understood as limiting the present disclosure. Those skilled in the art can make changes, modifications, replacements, and variations to the above embodiments within the scope of the present disclosure.

**Claims**

1. A control method for a vehicle, wherein the vehicle comprises a front-axle drive motor and a rear-axle drive motor, the front-axle drive motor is configured to drive front wheels of the vehicle, the rear-axle drive motor is configured to drive rear wheels of the vehicle, and the method comprises:

determining (S1) that the vehicle is in a stuck vehicle recovery mode;
determining (S2), based on a target speed of the front-axle drive motor and an actual speed of the front-axle drive motor, requested torque of the front-axle drive motor, and determining, based on a target speed of the rear-axle drive motor and an actual speed of the rear-axle drive motor, requested torque of the rear-axle drive motor;
correcting (S3), based on a front wheel speed and a rear wheel speed, the requested torque of the front-axle drive motor and the requested torque of the rear-axle drive motor to obtain output torque of the front-axle drive motor and output torque of the rear-axle drive motor; and
controlling (S4), based on the output torque of the front-axle drive motor and the output torque of the rear-axle drive motor, the front and rear wheels.

2. The control method for the vehicle according to claim 1, wherein the correcting (S3), based on a front wheel speed and a rear wheel speed, the requested torque of the front-axle drive motor and the requested torque of the rear-axle drive motor to obtain output torque of the front-axle drive motor and output torque of the rear-axle drive motor comprises:

when a first speed difference between a minimum value of the front wheel speed and a maximum value of the rear wheel speed is greater than a preset vehicle speed threshold, determining, based on the first speed difference, a first torque reduction coefficient;
when a second speed difference between a minimum value of the rear wheel speed and a maximum value of the front wheel speed is greater than the preset vehicle speed threshold, determining, based on the second speed difference, a second torque reduction coefficient;
correcting, based on the first torque reduction coefficient, the front-axle drive requested torque to obtain the output torque of the front-axle drive motor; and

correcting, based on the second torque reduction coefficient, the rear-axle drive requested torque to obtain the output torque of the rear-axle drive motor.

3. The control method for the vehicle according to claim 1, wherein the correcting (S3), based on a front wheel speed and a rear wheel speed, the requested torque of the front-axle drive motor and the requested torque of the rear-axle drive motor to obtain output torque of the front-axle drive motor and output torque of the rear-axle drive motor comprises:

when a third speed difference between a maximum value of the front wheel speed and a minimum value of the rear wheel speed is less than a preset vehicle speed threshold, determining, based on the third speed difference, a first torque increase coefficient;

when a fourth speed difference between a maximum value of the rear wheel speed and a minimum value of the front wheel speed is less than the preset vehicle speed threshold, determining, based on the fourth speed difference, a second torque increase coefficient;

correcting, based on the first torque increase coefficient, the front-axle drive requested torque to obtain the output torque of the front-axle drive motor; and

correcting, based on the second torque increase coefficient, the rear-axle drive requested torque to obtain the output torque of the rear-axle drive motor.

4. The control method for the vehicle according to claim 1, wherein the determining (S2), based on a target speed of the front-axle drive motor and an actual speed of the front-axle drive motor, requested torque of the front-axle drive motor comprises:

obtaining a target vehicle speed;

determining, based on the target vehicle speed, a transmission ratio of the front-axle drive motor, and a tire circumference of the front wheel, the target speed of the front-axle drive motor; and

performing proportional-integral control on a difference between the target speed of the front-axle drive motor and the actual speed of the front-axle drive motor to obtain the front-axle drive motor required torque.

5. The control method for the vehicle according to claim 1, wherein the determining (S2), based on a target speed of the rear-axle drive motor and an actual speed of the rear-axle drive motor, requested torque of the rear-axle drive motor comprises:

obtaining a target vehicle speed;

determining, based on the target vehicle speed, a transmission ratio of the rear-axle drive motor, and a tire circumference of the rear wheel, the target speed of the rear-axle drive motor; and

performing proportional-integral control on a difference between the target speed of the rear-axle drive motor and the actual speed of the rear-axle drive motor to obtain the rear-axle drive motor required torque.

6. The control method for the vehicle according to any one of claims 1 to 5, wherein the method further includes:

determining, based on the actual speed of the front-axle drive motor and a voltage value of the front-axle drive motor, external characteristic torque of the front-axle drive motor, and taking a smaller value between the external characteristic torque of the front-axle drive motor and the output torque of the front-axle drive motor as a final output torque of the front-axle drive motor; and

determining, based on the actual speed of the rear-axle drive motor and a voltage value of the rear-axle drive motor, external characteristic torque of the rear-axle drive motor, and taking a smaller value between the external characteristic torque of the rear-axle drive motor and the output torque of the rear-axle drive motor as a final output torque of the rear-axle drive motor.

7. The control method for the vehicle according to any one of claims 1 to 5, wherein the vehicle further comprises a front-axle differential lock and a rear-axle differential lock, and when the vehicle is in the stuck vehicle recovery mode, the front-axle differential lock and the rear-axle differential lock are in a locked state.

8. A control device for a vehicle, wherein the vehicle comprises a front-axle drive motor and a rear-axle drive motor, the front-axle drive motor is configured to drive front wheels of the vehicle, the rear-axle drive motor is configured to drive rear wheels of the vehicle, and the device comprises:

a first determination module (10), configured to determine that the vehicle is in a stuck vehicle recovery mode;

a second determination module (20), configured to determine, based on a target speed of the front-axle drive motor and an actual speed of the front-axle drive motor, a required torque of the front-axle drive motor;

a third determination module (30), configured to determine, based on a target speed of the rear-axle drive motor and an actual speed of the rear-axle drive motor, a required torque of the rear-axle drive motor;

a calculation module (40), configured to correct, based on a front wheel speed and a rear wheel speed, the required torque of the front-axle drive motor and the required torque of the rear-axle drive motor to obtain output torque of the front-axle drive motor and output torque of the rear-axle drive motor;

a first control module (50), configured to control, based on the output torque of the front-axle drive motor, the front wheels; and

a second control module (60), configured to control, based on the output torque of the rear-axle drive motor, the rear wheels.

9. The control device for the vehicle according to claim 8, wherein during a process of correcting, based on the front wheel speed and the rear wheel speed, the required torque of the front-axle drive motor and the required torque of the rear-axle drive motor to obtain the output torque of the front-axle drive motor and the output torque of the rear-axle drive motor by the calculation module (40), the calculation module (40) is further configured to: when a first speed difference between a minimum value of the front wheel speed and a maximum value of the rear wheel speed is greater than a preset vehicle speed threshold, determine, based on the first speed difference, a first torque reduction coefficient; when a second speed difference between a minimum value of the rear wheel speed and a maximum value of the front wheel speed is greater than the preset vehicle speed threshold, determine, based on the second speed difference, a second torque reduction coefficient; correct, based on the first torque reduction coefficient, the front-axle drive requested torque to obtain the output torque of the front-axle drive motor; and correct, based on the second torque reduction coefficient, the rear-axle drive requested torque to obtain the output torque of the rear-axle drive motor.

10. The control device for the vehicle according to claim 8, wherein during a process of correcting, based on the front wheel speed and the rear wheel speed, the required torque of the front-axle drive motor and the required torque of the rear-axle drive motor to obtain the output torque of the front-axle drive motor and the output torque of the rear-axle drive motor by the calculation module (40), the calculation module (40) is further configured to: when a third speed difference between a maximum value of the front wheel speed and a minimum value of the rear wheel speed is less than a preset vehicle speed threshold, determine, based on the third speed difference, a first torque increase coefficient; when a fourth speed difference between a maximum value of the rear wheel speed and a minimum value of the front wheel speed is less than the preset vehicle speed threshold, determine, based on the fourth speed difference, a second torque increase coefficient; correct, based on the first torque increase coefficient, the front-axle drive requested torque to obtain the output torque of the front-axle drive motor; and correct, based on the second torque increase coefficient, the rear-axle drive requested torque to obtain the output torque of the rear-axle drive motor.

11. The control device for the vehicle according to claim 8, wherein during a process of determining, based on the target speed of the front-axle drive motor and the actual speed of the front-axle drive motor, the requested torque of the front-axle drive motor by the second determination module (20), the second determination module (20) is further configured to: obtain a target vehicle speed; determine, based on the target vehicle speed, a transmission ratio of the front-axle drive motor, and a tire circumference of the front wheel, the target speed of the front-axle drive motor; and perform proportional-integral control on a difference between the target speed of the front-axle drive motor and the actual speed of the front-axle drive motor to obtain the front-axle drive motor required torque.

12. The control device for the vehicle according to claim 8, wherein during a process of determining, based on the target speed of the rear-axle drive motor and the actual speed of the rear-axle drive motor, the requested torque of the rear-axle drive motor by the third determination module (30), the third determination module (30) is further configured to: obtain a target vehicle speed; determine, based on the target vehicle speed, a transmission ratio of the rear-axle drive motor, and a tire circumference of the rear wheel, the target speed of the rear-axle drive motor; and perform proportional-integral control on a difference between the target speed of the rear-axle drive motor and the actual speed of the rear-axle drive motor to obtain the rear-axle drive motor required torque.

13. The control device for the vehicle according to claim 8, wherein the first control module (50) is further configured to: determine, based on the actual speed of the front-axle drive motor and a voltage value of the front-axle drive motor, external characteristic torque of the front-axle drive motor, and take a smaller value between the external characteristic torque of the front-axle drive motor and the output torque of the front-axle drive motor as a final output torque of the front-axle drive motor; and the second control module (60) is further configured to: determine, based on the actual speed of the rear-axle drive motor and a voltage value of the rear-axle drive motor, external characteristic torque of the rear-axle drive motor, and take a smaller value between the external characteristic torque of the rear-axle drive motor and the output torque of the rear-axle drive motor as a final output torque of the rear-axle drive motor.

14. A computer-readable storage medium, wherein a vehicle control program is stored, and when the vehicle control program is executed by a processor, the control method for the vehicle according to any one of claims 1 to 7 is implemented.

15. A vehicle, comprising: a front-axle drive motor (110), a front-axle drive motor controller (120), a rear-axle drive motor (130), and a rear-axle drive motor controller (140), wherein,

the front-axle drive motor controller (120) is configured to, when the vehicle is in a stuck vehicle recovery mode, determine, based on a target speed of the front-axle drive motor and an actual speed of the front-axle drive motor, a required torque of the front-axle drive motor, and correct, based on a front wheel speed and a rear wheel speed, the required torque of the front-axle drive motor to obtain output torque of the front-axle drive motor, and control, based on the output torque of the front-axle drive motor, the front wheels;
the rear-axle drive motor controller (140) is configured to, when the vehicle is in the stuck vehicle recovery mode, determine, based on a target speed of the rear-axle drive motor and an actual speed of the rear-axle drive motor, a required torque of the rear-axle drive motor, and correct, based on the front wheel speed and the rear wheel speed, the required torque of the rear-axle drive motor to obtain output torque of the rear-axle drive motor, and control, based on the output torque of the rear-axle drive motor, the rear wheels.

Determining that the vehicle is in a stuck vehicle recovery mode ⌐S1

Determining, based on a target speed of the front-axle drive motor and an actual speed of the front-axle drive motor, requested torque of the front-axle drive motor, and determining, based on a target speed of the rear-axle drive motor and an actual speed of the rear-axle drive motor, requested torque of the rear-axle drive motor ⌐S2

Correcting, based on a front wheel speed and a rear wheel speed, the requested torque of the front-axle drive motor and the requested torque of the rear-axle drive motor to obtain output torque of the front-axle drive motor and output torque of the rear-axle drive motor ⌐S3

Controlling, based on the output torque of the front-axle drive motor and the output torque of the rear-axle drive motor, the front and rear wheels ⌐S4

FIG. 1

Determining that the vehicle is in a stuck vehicle recovery mode, and locking the front-axle differential lock and the rear-axle differential lock ~S101

Obtaining a vehicle target speed ~S102

Calculating a target speed of the front-axle drive motor by the following formula: target speed of the front-axle drive motor = target speed 60 * 1000 front wheel tire circumference * transmission ratio of the front-axle drive motor ~S103

Calculating a target speed of the rear-axle drive motor by the following formula: target speed of the rear-axle drive motor = target speed 60 * 1000 rear wheel tire circumference * transmission ratio of the rear-axle drive motor ~S105

Performing PI control on a difference between the target speed of the front-axle drive motor and an actual speed of the front-axle drive motor to obtain a requested torque of the front-axle drive motor ~S104

Performing PI control on the difference between the target speed of the rear-axle drive motor and the actual speed of the rear-axle drive motor to obtain the requested torque of the rear-axle drive motor ~S106

Obtaining a left front wheel speed, a right front wheel speed, a left rear wheel speed, and a right rear wheel speed ~S107

Determining a minimum front wheel speed, a maximum front wheel speed, a maximum rear wheel speed, and a minimum rear wheel speed ~S108

Calculating a first speed difference by the following formula: first speed difference = minimum front wheel speed maximum rear wheel speed ~S109

Calculating a third speed difference by the following formula: third speed difference = maximum front wheel speed minimum rear wheel spee ~S111

Calculating a second round speed difference by the following formula: second round speed difference = the minimum value of the rear wheel speed the maximum value of the front wheel speed ~S117

Calculating a fourth round speed difference by the following formula: fourth round speed difference = the maximum value of the rear wheel speed the minimum value of the front wheel speed ~S119

Obtaining a first torque reduction coefficient by looking up the table based on the first speed differenc ~S110

Obtaining a first torque increase coefficient by looking up the table based on the third speed difference ~S112

Obtaining a second torque reduction coefficient by looking up the table based on the second round speed difference ~S118

Obtaining a second torque increase coefficient by looking up the table based on the fourth round speed differenc ~S120

Calculating output torque of the front-axle drive motor by the following formula: output torque of the front-axle drive motor = requested torque of the front-axle drive motor * first torque reduction coefficient * first torque increase coefficient ~S113

Calculating output torque of the rear-axle drive motor by the following formula: output torque of the rear-axle drive motor = required torque of the rear-axle drive motor * the second torque reduction coefficient * the second torque increase coefficient ~S121

Determining external characteristic torque of the front-axle drive motor based on the actual speed of the front-axle drive motor and a voltage value of the front-axle drive moto ~S114

Determining external characteristic torque of the rear-axle drive motor based on the actual speed of the rear-axle drive motor and a voltage value of the rear-axle drive motor ~S122

Determining a smaller value between the external characteristic torque of the front-axle drive motor and the output torque of the front-axle drive motor as final output torque of the front-axle drive motor ~S115

Determining a smaller value between the external characteristic torque of the rear-axle drive motor and the output torque of the rear-axle drive motor as final output torque of the rear-axle drive motor ~S123

Controlling the front wheels based on the final output torque of the front-axle drive motor ~S116

Controlling the rear wheel based on the final output torque of the rear-axle drive motor ~S124

FIG. 2

First determination module — 10

Second determination module — 20

Third determination module — 30

Calculation module — 40

Second control module — 50    First control module — 60

FIG. 3

Vehicle — 100

Front-axle drive motor — 110    Rear-axle drive motor — 130

Front-axle drive motor controller — 120    Rear-axle drive motor controller — 140

FIG. 4

Europäisches
Patentamt
European
Patent Office
Office européen
des brevets

# EUROPEAN SEARCH REPORT

**Application Number**

EP 25 20 5261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 124 881 A (BYD CO LTD) 28 November 2023 (2023-11-28) | 1,4-8, 11-15 | INV. B60L3/10 |
| Y | * the whole document * | 2,3,9,10 | B60L15/20 |
| X,P | & US 2025/074209 A1 (LING HEPING [CN] ET AL) 6 March 2025 (2025-03-06) | 1,4-8, 11-15 | B60W30/18 B60K17/356 |
| Y,P | * paragraphs [0088] - [0128], [0133] - [0188], [0191], [0193]; figures 1-6 * | 2,3,9,10 | B60W10/08 B60W10/16 B60W50/08 |
| Y | CN 117 400 747 A (DONGFENG MOTOR GROUP CO LTD) 16 January 2024 (2024-01-16) | 2,3,9,10 | |
| A | * paragraphs [0047] - [0135]; claims 1, 4-10; figures 1-3; tables 1-4 * | 1,4-8, 11-15 | |
| A | CN 117 533 292 A (BYD CO LTD) 9 February 2024 (2024-02-09) * the whole document * | 1-15 | |
| A,P | & US 2025/083741 A1 (YANG DONGSHENG [CN] ET AL) 13 March 2025 (2025-03-13) * paragraphs [0036], [0043] - [0047], [0103] - [0124], [0141], [0183] - [0199], [0357] - [0364]; figures 3-5a, 8-10, 16-18 * | 1-15 | |

**TECHNICAL FIELDS SEARCHED (IPC)**

B60L
B60K
B60W

The present search report has been drawn up for all claims

| Place of search | Date of completion of the search | Examiner |
|---|---|---|
| The Hague | 19 December 2025 | Bronski, Bartlomiej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EP 4 717 505 A1

## ANNEX TO THE EUROPEAN SEARCH REPORT
## ON EUROPEAN PATENT APPLICATION NO.

EP 25 20 5261

19-12-2025

| Patent document cited in search report | | Publication date | Patent family member(s) | | Publication date |
|---|---|---|---|---|---|
| CN 117124881 | A | 28-11-2023 | AU | 2023271068 A1 | 12-12-2024 |
| | | | CN | 117124881 A | 28-11-2023 |
| | | | EP | 4530119 A1 | 02-04-2025 |
| | | | JP | 2025516891 A | 30-05-2025 |
| | | | KR | 20240166002 A | 25-11-2024 |
| | | | US | 2025074209 A1 | 06-03-2025 |
| | | | WO | 2023221899 A1 | 23-11-2023 |
| CN 117400747 | A | 16-01-2024 | NONE | | |
| CN 117533292 | A | 09-02-2024 | AU | 2024204406 A1 | 27-03-2025 |
| | | | CA | 3244662 A1 | 13-06-2025 |
| | | | CN | 117533292 A | 09-02-2024 |
| | | | EP | 4545371 A1 | 30-04-2025 |
| | | | JP | 2025536165 A | 05-11-2025 |
| | | | KR | 20250040875 A | 25-03-2025 |
| | | | US | 2025083741 A1 | 13-03-2025 |
| | | | WO | 2025055241 A1 | 20-03-2025 |